(19) Europäisches Patentamt

European Patent Office

Office européen des brevets

(11) Veröffentlichungsnummer: **0 478 958 B1**

(12) **EUROPÄISCHE PATENTSCHRIFT**

(45) Veröffentlichungstag der Patentschrift: **29.11.95**

(51) Int. Cl.⁶: **G01D 5/24**

(21) Anmeldenummer: **91114510.0**

(22) Anmeldetag: **29.08.91**

(54) **Kapazitiver Sensor zur Messung eines Kraftstoffwandfilms.**

(30) Priorität: **04.10.90 DE 4031210**

(43) Veröffentlichungstag der Anmeldung:
**08.04.92 Patentblatt 92/15**

(45) Bekanntmachung des Hinweises auf die
Patenterteilung:
**29.11.95 Patentblatt 95/48**

(84) Benannte Vertragsstaaten:
**DE FR GB IT SE**

(56) Entgegenhaltungen:
**DE-A- 2 150 928**

**ARCHIV FÜR TECHNISCHES MESSEN +
MESSTECHNISCHE PRAXIS, "Ein kapazitives
Messverfahren zur Bestimmung der Dicke
von Flüssigkeitsfilmen", Blatt V 1124-19, November 1972, R. OLDENBOURG VERLAG
MÜNCHEN, Seiten 201-204**

(73) Patentinhaber: **ROBERT BOSCH GMBH
Postfach 30 02 20
D-70442 Stuttgart (DE)**

(72) Erfinder: **Wocher, Berthold, Dr. Dipl.-Ing.
Korntaler Strasse 23
W-7250 Leonberg (DE)**
Erfinder: **Magenau, Horst
Lammstrasse 4
W-7016 Gerlingen (DE)**
Erfinder: **Bollhagen, Heins-Erdam
Eltinger Strasse 61
W-7250 Leonberg (DE)**
Erfinder: **Steinlechner, Siegbert, Dipl.-Ing.
In den Ziegelwiesen 5
W-7250 Leonberg-Warmbronn (DE)**
Erfinder: **Simon, Nikolaus, Dr., Dipl.-Ing.
Ostermannweg 3
W-8110 Murnau am Staffelsee (DE)**

## Beschreibung

### Stand der Technik

Die Erfindung geht aus von einem kapazitiven Sensor nach der Gattung des Hauptanspruchs. Aus der Zeitschrift ATM (Archiv für technisches Messen, Blatt V, 1124-19, November 1972, Seiten 201 bis 204) ist ein kapazitives Meßverfahren zur Bestimmung der Dicke von Flüssigkeitsfilmen bekannt. Bei diesem Verfahren wird ein kapazitiver Sensor verwendet, dessen Elektroden kammförmig ausgebildet und verzahnt angeordnet sind. Diese Kondensatoren bilden einen lateralen Kondensator, dessen Kapazität sich bei Benetzung der Elektroden und der Zwischenräume mit einer Flüssigkeit ändert. Da die Kapazitätsänderung durch die Benetzung sehr stark von der Größe der Kapazität abhängt, sind mehrere kapazitive Elemente zusammengeschaltet. Es hat sich jedoch gezeigt, daß die Empfindlichkeit dieses Sensors relativ gering ist, da auf der Rückseite des Sensors elektrische Felder entstehen, die einen parasitären Kapazitätsbeitrag liefern. Dieser Kapazitätsbeitrag ist wegen der Dielektrizitätskonstanten des Substrats, auf dem die Elektroden aufgebracht sind, größer als der sich ändernde Kapazitätsbeitrag der Vorderseite der Elektroden. Daher ist trotz großer Kapazität des Sensors die auswertbare Kapazitätsänderung, die vom Flüssigkeitsfilm abhängt, relativ klein. Hinzu kommt, daß durch elektrische Störfelder die Messung des Wandfilms verfälscht werden kann.

Aus der DE-OS 21 50 928 ist ein kapazitiver Meßkopf bekannt, bei dem die Dicke eines im Meßkondensator durchlaufenden Fadens bestimmt wird. Dazu wird der Meßkondensator von einem Generator angeregt; die sich aufgrund der unterschiedlichen Dicke des Fadens ergebenden Kapazitätsänderungen werden ermittelt. Da mit diesem Meßverfahren sehr kleine Kapazitätsänderungen auszuwerten sind, sind zusätzliche Kompensationselektroden sowie Schutzelektroden vorhanden, die zum einen ein homogenes Feld im Meßkondensator bewirken und zum anderen zum Schutz vor Einstreuungen dienen. Eine Verwendung des beschriebenen kapazitiven Meßkopfs in anderem Zusammenhang als zur Ermittlung der Dicke eines Fadens, einer Schnur, eines Bandes aus textilen Material o.dgl., oder folien wird nicht erwähnt.

### Vorteile der Erfindung

Der erfindungsgemäße Sensor mit den kennzeichnenden Merkmalen des Hauptanspruchs hat demgegenüber den Vorteil, daß die relative Kapazitätsänderung bei Benetzung der Elektroden groß ist, da die zusätzliche Masseelektrode die kapazitive Kopplung zwischen den Elektroden über die Rückseite des Sensors auf ein Minimum reduziert, so daß der größte Kapazitätsbeitrag über den Spalt zwischen den Elektroden an der Sensoroberseite geliefert wird. Desweiteren bewirkt der rückseitige definierte Massebelag des Sensors eine Abschirmung nach außen, so daß der Einfluß elektrischer Störfelder gegen Masse abgeführt wird und undefinierte Masseflächen in der Nähe der Rückseite die Sensorkennlinie nicht beeinflussen.

Durch die in den abhängigen Ansprüchen aufgeführten Maßnahmen sind vorteilhafte Weiterbildungen und Verbesserungen des im Hauptanspruch angegebenen Sensors möglich. Durch die durchgehende Masseelektrode wird besonders vorteilhaft eine gute Schirmung gegen elektrische Störfelder erreicht. Die große Massefläche ist sehr niederohmig, so daß der Spannungsversatz auf der Masseelektrode gering ist.

Als Vorteil ist auch anzusehen, daß die Wirkung parasitärer Kapazitäten auf der Rückseite des Sensors weitgehend vermieden werden.

Besonders vorteilhaft ist, daß die lateral angeordneten Elektroden und die Masseelektrode auf den Oberflächen einer Kunststoffolie aufgebracht sind. Kunststoffolien sind gute Isolatoren, leicht formbar und leicht mit leitfähigen Schichten versehbar.

Als besonderer Vorteil ist hervorzuheben, daß sowohl der Meßbereich als auch die Meßempfindlichkeit durch die Anordnung und Gestaltung der Elektroden wählbar ist. Dadurch kann auf einfache Weise der Sensor an die Erfordernisse des Meßobjekts angepaßt werden.

Ein weiterer Vorteil ist auch darin zu sehen, daß durch die gemeinsame Versorgung der Kondensatorelemente mit dem gleichen Generator die Anordnung sehr einfach aufbaubar ist. Es werden vorteilhaft nur wenige Zuleitungen benötigt, da die entsprechenden Elektroden der Sensorelemente parallel geschaltet sind. Insbesondere ist vorteilhaft, daß durch die Versorgung der Elektroden mit einer dreieckförmigen oder sinusförmigen Wechselspannung beim Umladen der Kapazitäten keine hohen Stromspitzen auftreten.

Weiterhin ist vorteilhaft, daß die einzelnen Kondensatorelemente in enger Nachbarschaft angeordnet sind, ohne daß ein Übersprechen der Meßsignale auftritt. Dadurch ist der Sensor auch bei engen Raumverhältnissen einsetzbar.

Ein weiterer Vorteil ist, daß jeweils eine laterale Elektrode auf Massepotential geschaltet ist. Dadurch bilden sich zwischen dieser Elektrode und der dritten Elektrode keine Potentialunterschiede aus. Das Meßsignal kann deshalb auch über längere Zuleitungen geführt werden.

Weitere Vorteile der Erfindung sind der Beschreibung entnehmbar.

## Zeichnung

Ausführungsbeispiele der Erfindung sind in der Zeichnung dargestellt und in der nachfolgenden Beschreibung näher erläutert. Es zeigen Figur 1 einen Sensor in Draufsicht, Figur 2 ein Kondensatorelement, Figur 3 ein Schnittbild, Figur 4 ein zweites Ausführungsbeispiel, Figur 5 ein entsprechendes Kondensatorelement, Figur 6 ein Schnittbild und Figur 7 eine Auswerteschaltung.

## Beschreibung der Ausführungsbeispiele

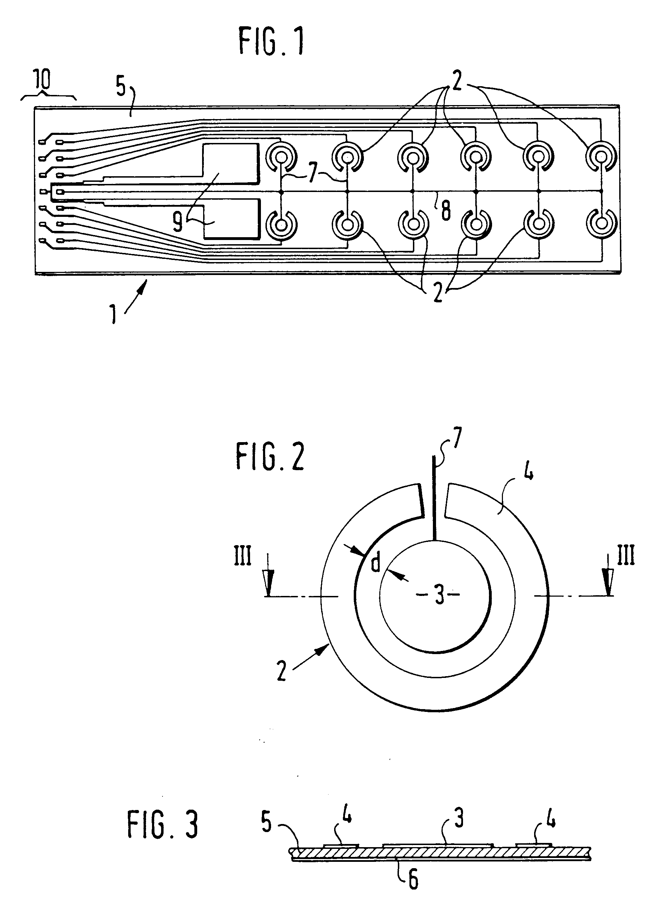

Ein erstes Ausführungsbeispiel ist in Figur 1 dargestellt. Auf einem Trägersubstrat 5, das als Isolator ausgebildet ist und beispielsweise aus einem Kunststoff wie Polyimid besteht, sind in Reihen und Spalten lateral ausgebildete Kondensatorelemente 2 angeordnet. Das Trägersubstrat kann ein flexibles Material aufweisen. Wie aus Figur 2 in vergrößerter Darstellung ersichtlich ist, weist jedes Kondensatorelement eine erste kreisförmige Elektrode 3 auf, die ringförmig im Abstand d von einer zweiten Elektrode 4 umgeben ist. Die zweite Elektrode weist einen Spalt auf, durch den eine Anschlußleitung 7 zur ersten Elektrode 3 geführt ist. Die Elektroden bestehen aus einem elektrisch leitenden Material, beispielsweise aus Kupfer, Aluminium, Gold, Kohle oder Silber-Legierungen. Die Elektroden 3, 4 sind aufgebracht, beispielsweise als Laminate. Jeweils die erste Elektrode 3 eines Kondensatorelementes ist über den Anschluß 7 mit einer gemeinsamen Leitung 8 verbunden. Die gemeinsame Leitung 8 wird durch zwei parallelgeführte Massefelder 9, die ebenfalls auf dem Träger 5 aufgebracht sind, geschirmt.

Die Rückseite des Trägers 5 ist mit einem durchgehenden leitenden Laminat versehen. Der Aufbau ist im Schnittbild der Figur 3 dargestellt. Die Masseelektrode 6 kann aus dem gleichen Material bestehen wie die Kondensatorelektroden 3, 4. Der Träger 5 kann als flexible Folie ausgebildet sein, die leicht insbesondere an gekrümmte Flächen anpaßbar ist.

In Figur 1 weist der Sensor 1 Kondensatorelemente 2 in vergrößerter Darstellung auf, die relativ eng in Reihen und Spalten angeordnet sind. Die einzelnen Elemente werden über die gemeinsame Leitung 8, die zur ersten Elektrode 3 geführt ist, mit Wechselspannung versorgt. Die jeweils zweite Elektrode 4 ist über eine getrennte Leitung zur Anschlußleiste 10 geführt. Wird die rückseitige Masseelektrode mitgezählt, dann werden für n Kondensatorelemente n + 2 Leitungen benötigt. Die Anzahl der benötigten Elemente ist beliebig wählbar. Wird beispielsweise der Sensor zur Messung der Kraftstofffilmhöhe im Ansaugrohr eines Verbrennungsmotors verwendet, dann ist besonders günstig, wenn jeweils die zweite Elektrode 4 über eine Meßleitung separat herausgeführt ist, da die Wandfilmhöhe an den einzelnen Orten im Ansaugrohr sehr unterschiedlich sein kann. Man erhält dadurch sehr viele Meßpunkte, die mit relativ wenigen Leitungen erfaßt werden können.

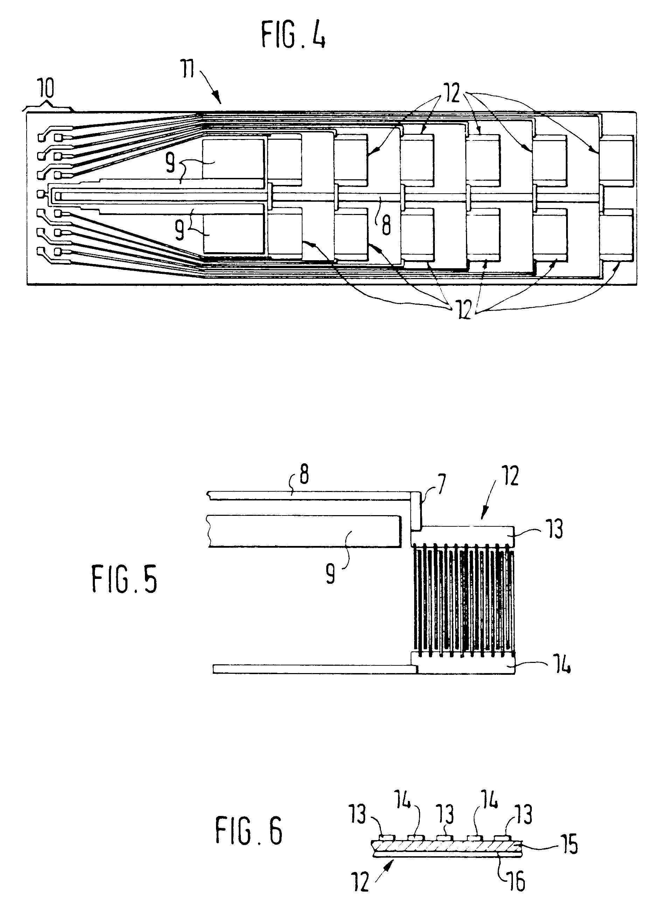

Ein zweites Ausführungsbeispiel der Erfindung ist in den Figuren 4 bis 6 dargestellt. Der Sensor 11 weist Kondensatorelemente 12 auf, die kammartig ausgebildete Elektroden 13, 14 haben und ineinander verzahnt angeordnet sind, so daß die Kapazität eines Kondensatorelementes 12 durch die Summe der Kapazitäten der sich gegenüberstehenden Zähne bzw. Streifen gebildet ist. Die Kondensatorelemente 12 haben die gleiche Anordnung wie beim ersten Ausführungsbeispiel. Die Elektroden 13 werden durch eine gemeinsame Versorgungsleitung 8 angesteuert. Die Versorgungsleitung 8 ist, wie beim ersten Ausführungsbeispiel, über teilweise parallel geführte Masseleitungen 9 geschirmt. Die Leitungen 9 sind wie beim ersten Ausführungsbeispiel mit der Masseelektrode 6 auf der Rückseite des Trägers 5 elektrisch verbunden. Die zweite Elektrode 14 ist über eine separate Meßleitung zur Anschlußleiste 10 herausgeführt.

In Figur 6 ist ein Schnitt durch ein Kondensatorelement 12 dargestellt, bei dem insbesondere die Anordnung der Elektroden 13, 14 sowie der Masseelektrode 16 beidseitig auf dem Träger 15 dargestellt ist.

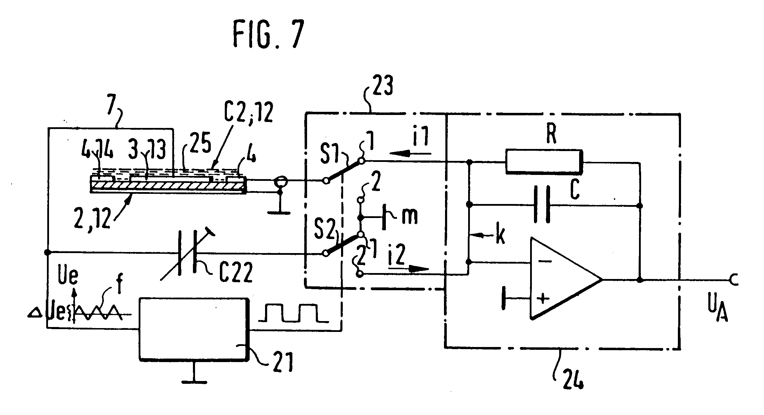

Im folgenden wird die Funktionsweise dieser Ausführungsbeispiele beschrieben. Der Sensor ist besonders gut geeignet für die Messung der Wandfilmhöhe eines Kraftstoffes im Ansaugrohr einer Brennkraftmaschine, beispielsweise Benzin oder Diesel. Zu diesem Zweck wird der Sensor im Innenrohr des Ansaugstutzens der Brennkraftmaschine an der zu messenden Stelle eingebaut. Über die Anschlußleiste 10 sind die Meßsignale herausgeführt und können von einer Auswerteschaltung, wie sie beispielsweise in Figur 7 dargestellt ist, ausgewertet werden.

Wird beispielsweise die Oberfläche des Sensors 1; 11 mit Kraftstoff 25 benetzt, dann ändert sich die Kapazität des Kondensatorelementes 2; 12 in Abhängigkeit von der Höhe des Kraftstofffilms 25. Zur Umwandlung der Kapazitätsänderung wird in Abhängigkeit von der Filmhöhe ein analoges Spannungssignal $U_A$ generiert, das am Ausgang eines als Tiefpaß rückgekoppelten Operationsverstärkers 24 abgreifbar ist (Figur 7).

Von einem für alle Sensoren gemeinsamen Generator 21 werden vorteilhaft die Elektroden 3; 13 mit einer dreieckförmigen oder sinusförmigen Wechselspannung $u_e$ mit einer Frequenz f von beispielsweise 200 kHz und einem Spannungshub $\Delta u_e$ zwischen den Extremwerten von beispielsweise 10 V erregt. Die Elektroden 4; 14 sind jeweils über den Umschaltkontakt S1 des elektronischen Schalters 23, entweder mit dem invertierenden Eingang k des rückgekoppelten Operationsverstärkers oder mit der Hasse m verbunden. Zu jedem Kondensatorelement (C2; 12) 2; 12 gehört ein Vergleichskondensator C22, dessen einer Anschluß fest mit der Elektrode 3 (bzw. der Generatorspannung $u_e$) verbunden ist, während der zweite Anschluß über einen Umschaltkontakt S2 des elektronischen Schalters 23 an Masse m oder den invertierenden Eingang k des Operationsverstärkers 24 geschaltet wird. Die Schalter S1 und S2 wechseln ihre Schalterstellung (1 bzw. 2) phasenstarr mit der Wechselspannung $u_e$ jeweils dann, wenn die Wechselspannung $u_e$ ihren oberen oder unteren Extremwert erreicht.

Wegen der Rückkopplung des Operationsverstärkers hat der Knotenpunkt k stets Massepotential. Beim Umschalten der beiden Schalter ändert sich deshalb vorteilhaft das Potential der schalterseitigen Anschlüsse C2;12 und C22 nicht. Der Schalter sorgt dafür, daß Umladungen der Kondensatoren C2;12 und C22 je nach Schalterstellung aus unterschiedlicher Ladungsquelle erfolgen: in Schalterstellung 1 aus dem Knotenpunkt k, in Schalterstellung 2 aus dem Knotenpunkt m. Die parasitäre Kapazität, die aus der rückseitigen dritten Elektrode 6; 16 des Sensors 1; 11 und der Elektrode 4; 14 gebildet wird, sowie die parasitäre Kapazität der Anschlußleitung zur Elektrode 4;14 liefern aber wegen fehlender Potentialschwankung in vorteilhafter Weise keinen Beitrag zum Ladungsaustausch.

Wird beispielsweise während der abfallenden Phase der Spannung $u_e$ die Schalterstellung 1 eingenommen, so wird der Kondensator C2 umgeladen und entnimmt eine Ladung q1 = C2 * $\Delta u_e$ aus dem Knotenpunkt K der Operationsverstärkerschaltung. Während der steigenden Phase von $u_e$ wird dann bei Schalterstellung 2 der Vergleichskondensator C22 umgeladen und liefert die Ladung q2 = C22 * $\Delta u_e$ in den Knotenpunkt K.

Bei der Frequenz f der Erregerspannung und damit der Ladungstransporte ergeben sich so zwei pulsierende Gleichströme mit den Mittelwerten

$$i_1 = C2 * f * \Delta u_e \qquad i_2 = C22 * f * \Delta u_e ,$$

die sich am Knotenpunkt K überlagern.

Für die Ausgangsgleichspannung des Operationsverstärkers, der wegen des Kondensators C Tiefpasscharakteristik hat gilt:

$$U_A = R^*(i_1 - i_2) = \Delta u_e * R * f * (C2 - C22)$$

Bei fehlendem Kraftstoffilm wird der Vergleichskondensator C22 so abgeglichen, daß $U_A = 0$ ist.

Tritt ein Kraftstoffilm auf, so erhöht sich die Kapazität C2 und es entsteht eine von der Filmdicke abhängige analoge Ausgangsspannung $U_A$.

Durch die fehlenden Potentialschwankungen an den Elektroden 4; 14 und den dazugehörenden Anschlußleitungen werden parasitäre Kapazitäten nahezu unschädlich für die Empfindlichkeit des Sensors. Damit kann vorteilhaft die rückseitige dritte Elektrode als Abschirmung gegen rückseitiges Übersprechen sowie zur Abschirmung gegen externe Störstrahlung verwendet werden, so daß sich eine Empfindlichkeitssteigerung des Sensors 1;11 ergibt.

Signale von Sensoren mit benachbarten Anschlußleitungen zeigen wegen der vernachlässigbar kleinen Potentialschwankungen vorteilhaft kein gegenseitiges kapazitives Übersprechen. Damit ist die Verlegung vieler paralleler Sensoranschlußleitungen auf engstem Raum möglich, wobei die Anschlußleitungen relativ lang sein können und damit eine relativ weit entfernte Anordnung der elektronischen Schaltung zulassen.

Da im Substrat praktisch nur wirkungslose parasitäre Kapazitäten auftreten, sind auch Schwankungen der Dielektrizitätskonstante des Substrats beispielsweise durch Temperaturschwankungen unwirksam. Das Substrat kann nach anderen Gesichtspunkten wie beispielsweise der Flexibilität ausgewählt werden.

**Patentansprüche**

1. Kapazitiver Sensor zur Messung eines Kraftstoffwandfilmes im Ansaugkanal einer Brennkraftmaschine, mit wenigstens einem Kondensatorelement, dessen beide Elektroden auf einem isolierenden Träger aufgebracht und lateral auf der Oberseite des Trägers angeordnet sind, und mit elektrischen Leitungen zum Anschluß einer Auswerteschaltung, dadurch gekennzeichnet, daß das wenigstens eine Kondensatorelement eine wählbare Anzahl von mehreren Kondensatorelementen (2; 12) ist, die von einem gemeinsamen Generator (21) ansteuerbar sind, daß eine dritte Elektrode vorhanden ist, die auf der Rückseite des Trägers (5; 15) angeordnet und die als durchgehende Masseelektrode (6; 16) zu den lateral angeordneten Elektroden (3, 4; 13, 14) der Kondensatorelemente (2; 12) ausgebildet ist.

2. Kapazitiver Sensor nach Anspruch 1, dadurch gekennzeichnet, daß der Träger (6; 16) eine Kunststoffolie ist.

3. Kapazitiver Sensor nach Anspruch 2, dadurch gekennzeichnet, daß die Kunststoffolie ein Polyimid aufweist.

4.  Kapazitiver Sensor nach einem der vorhergehenden Ansprüche, dadurch gekennzeichnet, daß auf der Oberseite des Trägers (5) mindestens eine kreisförmige Elektrode (3) angeordnet ist, die von einer zweiten Elektrode (4) ringförmig umgeben ist.

5.  Kapazitiver Sensor nach Anspruch 4, dadurch gekennzeichnet, daß die zweite Elektrode (4) eine Öffnung aufweist und daß durch diese Öffnung die Leitung zur kreisförmigen Elektrode (3) geführt ist.

6.  Kapazitiver Sensor nach einem der vorhergehenden Ansprüche, dadurch gekennzeichnet, daß die Meßempfindlichkeit und/oder der Meßbereich des Sensors (1; 11) durch den Abstand (d) zwischen den Elektroden (3, 4; 13, 14) wählbar ist.

7.  Kapazitiver Sensor nach Anspruch 6, dadurch gekennzeichnet, daß die Meßempfindlichkeit und/oder der Meßbereich des Sensors (1; 11) durch Auswahl einer ringförmigen oder verzahnten Struktur der Elektroden (3, 4; 13, 14) vorgebbar ist.

8.  Kapazitiver Sensor nach einem der vorhergehenden Ansprüche, dadurch gekennzeichnet, daß die Kondensatorelemente (2; 12) in enger Nachbarschaft zueinander angeordnet sind.

9.  Kapazitiver Sensor nach einem der vorhergehenden Ansprüche, dadurch gekennzeichnet, daß die Kondensatorelemente (2) paarweise um die Mittelachse des Trägers (5) angeordnet sind, daß die kreisförmigen Elektroden (3) über Leitungen (7) mit einer auf der Mittelachse laufenden Leitung (8) verbunden sind, daß die Anschlüsse zu den zweiten Elektroden (4) am Rand des Trägers (5) zu einer Anschlußleiste (10) geführt sind und daß teilweise beidseitig zur Leitung (8) rechteckförmig ausgebildete leitfähige Flächen (9) vorsehbar sind, die mit der rückseitigen Elektrode (6) verbunden sind.

10. Kapazitiver Sensor nach Anspruch 9, dadurch gekennzeichnet, daß zur Ansteuerung der Kondensatorelemente (2; 12) eine dreieckförmige oder sinusförmige Wechselspannung verwendbar ist.

11. Kapazitiver Sensor nach einem der vorhergehenden Ansprüche, dadurch gekennzeichnet, daß jeweils eine der paarweise angeordneten Elektroden (4; 14) eines Kondensatorelementes (2; 12) abwechselnd mit Masse oder einem Eingang eines Verstärkers (24) schaltbar ist.

**Claims**

1.  Capacitive sensor for measuring a film of fuel on a surface in the intake port of an internal combustion engine, having at least one capacitor element whose two electrodes are mounted on an insulating carrier and are arranged laterally on the top of the carrier, and having electric lines for connecting an evaluation circuit, characterized in that at least one capacitor element is a selectable number of a plurality of capacitor elements (2; 12) which can be driven by a common generator (21), and in that a third electrode is present which is arranged on the rear of the carrier (5; 15) and which is constructed as a continuous earth electrode (6; 16) for the laterally arranged electrodes (3, 4; 13, 14) of the capacitor elements (2; 12).

2.  Capacitive sensor according to Claim 1, characterized in that the carrier (6; 16) is a plastic film.

3.  Capacitive sensor according to Claim 2, characterized in that the plastic film has a polyimide.

4.  Capacitive sensor according to one of the preceding claims, characterized in that at least one circular electrode (3) which is surrounded by a second electrode (4) in a ring shape is arranged on the top of the carrier (5).

5.  Capacitive sensor according to Claim 4, characterized in that the second electrode (4) has an opening, and in that the line is led to the circular electrode (3) through this opening.

6.  Capacitive sensor according to one of the preceding claims, Characterized in that the measuring sensitivity and/or the measuring range of the sensor (1; 11) can be selected by means of the distance (d) between the electrodes (3, 4; 13, 14).

7.  Capacitive sensor according to Claim 6, characterized in that the measuring sensitivity and/or the measuring range of the sensor (1; 11) can be prescribed by selecting a ring-shaped or toothed structure of the electrodes (3, 4; 13, 14).

8.  Capacitive sensor according to one of the preceding claims, characterized in that the capacitor elements (2; 12) are arranged in close proximity to one another.

9. Capacitive sensor according to one of the preceding claims, characterized in that the capacitor elements (2) are arranged in pairs about the central axis of the carrier (5), in that the circular electrodes (3) are connected via lines (7) to a line (8) running along the central axis, in that the terminals for the two electrodes (4) at the edge of the carrier (5) are led to a terminal strip (10), and in that conductive surfaces (9) which are constructed in a rectangular shape can be provided on both sides of the line (8) in certain parts and are connected to the electrode (6) at the rear.

10. Capacitive sensor according to Claim 9, characterized in that a triangular or sinusoidal alternating voltage can be used to drive the capacitor elements (2; 12).

11. Capacitive sensor according to one of the preceding claims, characterized in that in each case one of the electrodes (4; 14), which are arranged in pairs, of a capacitor element (2; 12) can be alternately connected to earth or to an input of an amplifier (24).

## Revendications

1. Capteur capacitif de mesure d'un film de carburant sur la paroi d'une tubulure d'aspiration d'un moteur à combustion interne, comportant au moins un condensateur dont les deux électrodes sont montées sur un support isolant, latéralement sur la face avant, et reliés par des conducteurs électriques à un circuit d'exploitation, caractérisé en ce qu'au moins un condensateur est constitué d'un nombre quelconque de plusieurs éléments de condensateur (2;12) commandés par un générateur commun (21), une troisième électrode étant prévue et montée sur la face arrière du support (5;15), et constitue une électrode de masse (6;16), continue, par rapport aux électrodes (3, 4 ; 13, 14), disposées latéralement, des éléments de condensateur (2;12).

2. Capteur capacitif selon la revendication 1, caractérisé en ce que le support (6;16) est une feuille de matière plastique.

3. Capteur capacitif selon la revendication 2, caractérisé en ce que la feuille est en polyimide.

4. Capteur capacitif selon une des revendications précédentes, caractérisé en ce que sur la face avant du support (5) est montée au moins une électrode (3) de forme circulaire, entourée par une seconde électrode (4) de forme annulaire.

5. Capteur capacitif selon la revendication 4, caractérisé en ce que la seconde électrode (4) est percée d'une ouverture servant de passage au conducteur relié à l'électrode circulaire (3).

6. Capteur capacitif selon la revendication 5, caractérisé en ce que la sensibilité et/ou le domaine de mesure du capteur (1;11) peut être choisie en faisant varier la distance (d) séparant les électrodes (3,4 ; 13,14)

7. Capteur capacitif selon la revendication 6, caractérisé en ce que la sensibilité et/ou le domaine de mesure du capteur (1;11) peut être définie à l'avance par le choix d'une structure annulaire ou dentelée des électrodes (3,4 ; 13,14).

8. Capteur capacitif selon une des revendications précédentes, caractérisé en ce que les éléments de condensateur sont disposés (2;12) très près les uns des autres.

9. Capteur capacitif selon une des revendications précédentes, caractérisé en ce que les éléments de condensateur (2) sont disposés par paires de part et d'autre de l'axe médian de support (5), les électrodes circulaires (3) sont reliées par des conducteurs. (7) à un conducteur (8) situé sur cet axe médian, les raccords sortant des secondes électrodes aboutissent à une barrette de raccordement (10) située au bord du support (5) tandis que des deux côtés d'une partie du conducteur (8) sont prévues des surfaces conductrices (9) rectangulaires, reliées à l'électrode (6) de la face arrière.

10. Capteur capacitif selon la revendication 9, caractérisé en ce qu'on utilise, pour commander les éléments de condensateur (2;12) une tension alternative, de forme triangulaire ou sinusoïdale.

11. Capteur capacitif selon une des revendications précédentes, caractérisé en ce que chacune des paires d'électrodes associées (4;14) peut être mise en liaison, alternativement, avec la masse ou avec une entrée d'un amplificateur (24) d'un élément de condensateur (2;12).

# FIG.1

# FIG.2

# FIG.3

7

FIG.4

FIG.5

FIG.6

EP 0 478 958 B1

# FIG. 7